(19) **Europäisches Patentamt**

**European Patent Office**

**Office européen des brevets**

(11) **EP 1 713 184 A1**

(12) **EUROPEAN PATENT APPLICATION**

(43) Date of publication:
**18.10.2006 Bulletin 2006/42**

(51) Int Cl.:
*H04B 1/707* (2006.01)    *H04L 27/00* (2006.01)

(21) Application number: **06007845.8**

(22) Date of filing: **13.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.04.2005 CN 200510025099**

(71) Applicant: **Spreadtrum Communications (Shangai) Co., Ltd.**
**Shangai 201203 (CN)**

(72) Inventor: **Zhang, Jan**
**Pudong, Shanghai 201203 (CN)**

(74) Representative: **Lang, Johannes**
**Bardehle Pagenberg Dost**
**Altenburg Geissler Isenbruck**
**Postfach 86 06 20**
**81633 München (DE)**

(54) **Method and apparatus for cell search in a W-CDMA system**

(57)     A technique is provided for automatic frequency offset correction in a wireless communication system. After demodulating and decoding a received signal in a receiver, channel estimation is also performed. The technique further includes a frequency correction method in a W-CDMA system, the method comprising:

(a) defining and storing in memory a plurality of control words for controlling automatic frequency correction (S11);

(b) for each of said plurality of control words:

(1) performing a correlation between the data in each received slot and a primary synchronization code in a matched filter;

(2) summing and averaging the results of the correlations;

(3) determining the correlation peak in a peak detection device (S12,S13);

(c) comparing the correlation peaks to determine the maximum peak and storing the corresponding control word (S14); and

(e) performing slot synchronization with the corresponding control word (S15);

slot synchronization

```
defines and stores in memory the control word          S11
for controlling automatic frequency correction

          ↓

          selects one AFC control word;                S12
          correlation; sum and average
          correlation results;
          determines the correlation peak;

          ↓

          repeats S22 to generate the correlation       S13
          peaks until the control words is finished

          ↓

          compares the correlation peaks to             S14
          determine the maximum peak and
          selects the corresponding control word

          ↓

          performs slot synchronization                 S15
          with the selected control word
```

Figure 5

**Description**

## FIELD OF THE INVENTION

The present invention relates to the field of wireless communications, and more particularly, to a method and apparatus for performing cell search in a W-CDMA system.

## BACKGROUND OF THE INVENTION

In a W-CDMA system, cell search is perfonned by the user equipment (UE) (also referred to as a mobile handset) when power is turned on in order to establish frame synchronization and to determine the scrambling code assigned to the found base station. Cell search by a mobile handset is generally performed in three steps: (1) acquisition of slot synchronization to the transmissions of the base station providing the strongest signal at the receiver of the mobile handset; (2) establish frame synchronization and identify the code group of the found base station; and (3) determine the scrambling code assigned to the found base station. The present invention is related to the slot synchronization technique.

To perform slot synchronization, the UE uses the primary synchronization code (PSC) in the synchronization channel (SCH). A filter that is matched to the primary synchronization code (PSC) is used and the primary synchronization code (PSC) is the same for every cell.

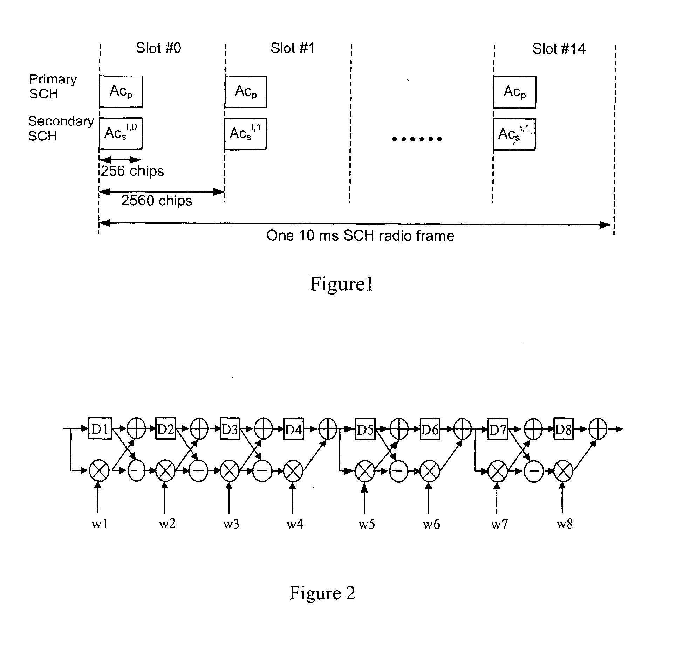

FIG. 1 shows the structure of the synchronization channel (SCH). The synchronization channel comprises a primary synchronization code (PSC) and a secondary synchronization code (SSC). Each frame of the synchronization channel (SCH) is 10 ms in length and contains 15 slots. Within each of these is information dependent on the data rate to be used and each of these is 2560 chips in length. The synchronization channel (SCH) only exists in the first 256 chips in each slot.

The primary synchronization code (PSC) in synchronization channel (SCH) is the so-called generalised hierarchical Goley sequence and has good autocorrelation properties, which is represented as:

$$a= < 1,1,1,1,1,1,-1,-1,1,-1,1,-1,1,-1,-1,1 > \qquad \text{Equation 1}$$

$$Cp= (1+j) * < a,a,a,-a,-a,a,-a,-a,a,a,a,-a,a,-a,a,a > \qquad \text{Equation 2}$$

As is shown in Figure 1, symbol A is modulated on the primary synchronization code (PCS) and a secondary synchronization code (SSC) to identify whether Space-Time Transmit Diversity (STTD) is applied to the P - CCPCH.

The matched filter matched to the primary synchronization code (PSC) is called a pruned efficient Golay correlator, the structure of which is schematically shown in FIG. 2. The filter parameter is configured as follows:

$$[D1,D2,D3,D4,D5,D6,D7,D8 ]=[128,64,16,32,8,1,4,2]*OSR \qquad \text{Equation 3}$$

$$[w1,w2,w3,w4,w5,w6,w7,w8]=[1,-1,1,1,1,1,1,1] \qquad \text{Equation 4}$$

OSR (over-sampling rate) denotes the number of samples within one chip period.

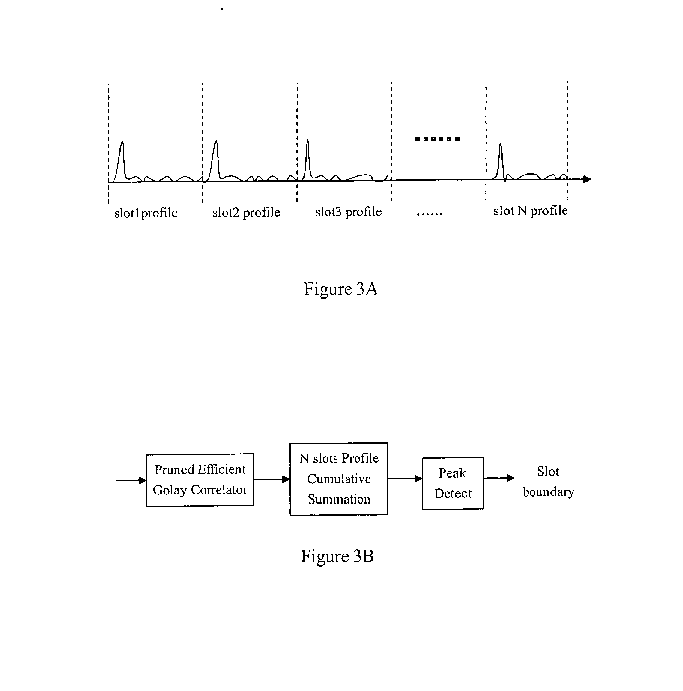

In the prior art, the procedure of obtaining slot synchronization is illustrated in FIG. 3B. ADC applies its output including the primary synchronization signal to the correlator, and the correlation result of every slot is illustrated in FIG. 3A. The slot boundary is located typically 128-chips ahead the peak timing. Thus, a correlation peak is derived in the peak detector from a sum and average of the N slots correlation. The process is schematically illustrated in the FIG. 3B.

In typical wireless communications systems, a frequency difference between the transmitter and the local oscillators of the UEs can disturb the reception of data. An automatic frequency correction apparatus is therefore employed to detect the frequency offset between a reception frequency and a local oscillation frequency in a specific interval of reception data from a transmitting base station. When carrier frequency is 2.1 GHz, and the reference accuracy of the local oscillator is 10 ppm, the frequency offset can reach up to 21 kHz.

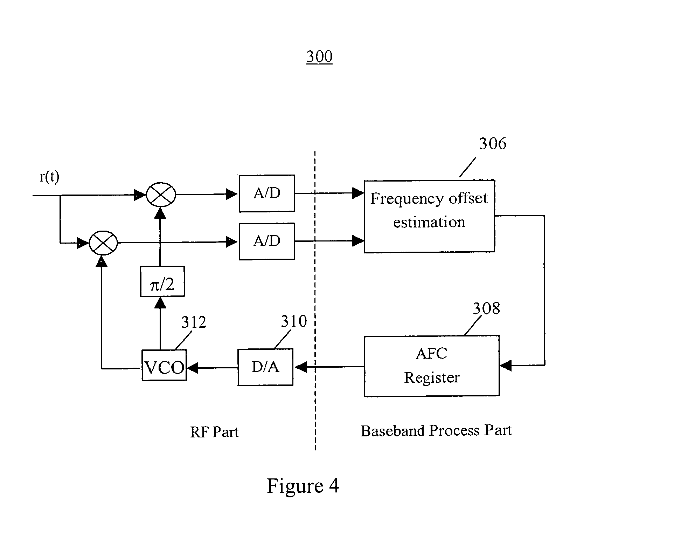

Turning to FIG. 4, a typical AFC 300 looped structure is shown. It comprises RF section 302 and baseband section 304. Baseband section 304 includes frequency estimation module 306 and AFC control register 308. RF section 302 includes digital/analog converter (DAC) 310 and voltage controlled oscillator (VCO) 312. Frequency estimation module 306 receives the baseband signal sent from the RF section to generate a frequency offset estimate. The module also filters and averages the frequency offset estimate to obtain and store a digital AFC control word into AFC control register 308. In the AFC register 308, correction amount data is determined on the basis of the AFC control word and passed on to the DAC 310. The D/A converter in the DAC 310 performs digital/analog conversion of the correction amount data to generate an analog output signal for local oscillation frequency correction, thereby correcting the frequency of the reference oscillator.

In the prior art UE, cell search is performed before automatic frequency correction. However, frequency offset results in performance degradation in cell search. In order to overcome the negative impact of the frequency offset, phase rotation needs to be conducted on the baseband signal in this prior art system. It is readily appreciated that this prior art is less efficient. A technique of correcting the frequency offset while performing the slot synchronization is needed to achieve high performance cell search.

## SUMMARY OF THE INVENTION

A frequency offset detection and compensation apparatus and method which can perform offset correction in the slot synchronizing process is disclosed. A cell search apparatus and method which uses the slot synchronization method of performing frequency offset correction in the process as the cell search step is also disclosed.

The frequency offset detection and compensation method in a W-CDMA system comprises:

(1) defining and storing in memory the control word for controlling automatic frequency correction;

(2) determining the correlation peaks for every control word:

(a) performing correlation between several received slots and synchronization code in the local primary synchronization code configured filter;

(b) sums and averages the results of the correlations;

(c) determines the correlation peak in the peak detection device;

(3) compares the correlation peaks for every control word, determines and selects the control word corresponding to the maximum correlation peak; and

(4) performs the slot timing with the selected automatic frequency correction control word and its correspondingly generated correlation peak.

According to another aspect of this invention, an automatic frequency correction apparatus receiving the output signal of the RF section is provided, which includes:

means for performing correlation, e.g. a matched filter corresponding to the primary synchronization code;

means for summing and averaging the correlations results of a plurality of slots;

means for determining the correlation peak;

means for storing the control word for controlling the automatic frequency correction;

means of a first selector, for selecting one of the automatic frequency correction control words stored in the memory;

means for comparing and determining the maximum correlation peak;

means of a second selector, for controlling the starting of the automatic frequency correction device;

means of automatic frequency correction control register, for receiving an automatic frequency correction control word and the output of the device performing automatic frequency correcting, and applying its output to RF section;

and

means for controlling the starting of the automatic frequency correction device initially on the mode of shutting down the operation of the frequency correction device.

## BRIEF DESCRIPTION OF THE DRAWINGS

The foregoing aspects and many of the attendant advantages of the invention will become more readily appreciated as the same become better understood by reference to the following detailed description, when taken in conjunction with the accompanying drawings, wherein:

FIG. 1 is a schematic diagram for illustrating the channel model of the synchronization channel;

FIG. 2 is a block diagram of the pruned efficient Golay correlator;

FIG. 3A is a schematic diagram for illustrating correlation peak generated from Golay correlator over a number of slots;

FIG. 3B illustrates the procedure of performing the slot synchronizing with Golay correlator;

FIG. 4 illustrates the looped structure of the automatic frequency correction in the prior art;

FIG. 5 is a flow chart of the operation of the frequency correction method in accordance with the present invention;

FIG. 6 is a flow chart of the operation of the cell search method in accordance with the present invention;

FIG. 7 is a block diagram of the frequency correction apparatus in accordance with the present invention;

FIG. 8 is a block diagram of the cell search apparatus in accordance with the present invention; and

FIG. 9 illustrates the reduction of the height in correlation peak caused by the frequency offset.

## DETAILED DESCRIPTION OF THE PREFERRED EMBODIMENTS

While the specification concludes with claims defining the features of the invention that are regarded as novel, it is believed that the invention will be better understood from a consideration of the following description in conjunction with the drawing figures.

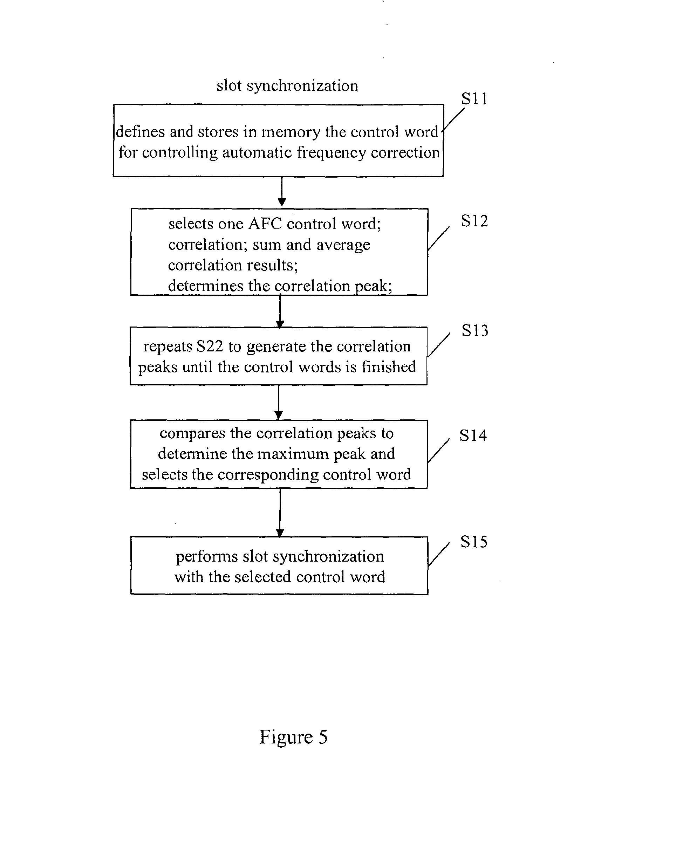

A method employing the invention is illustrated in FIG. 5 wherein:

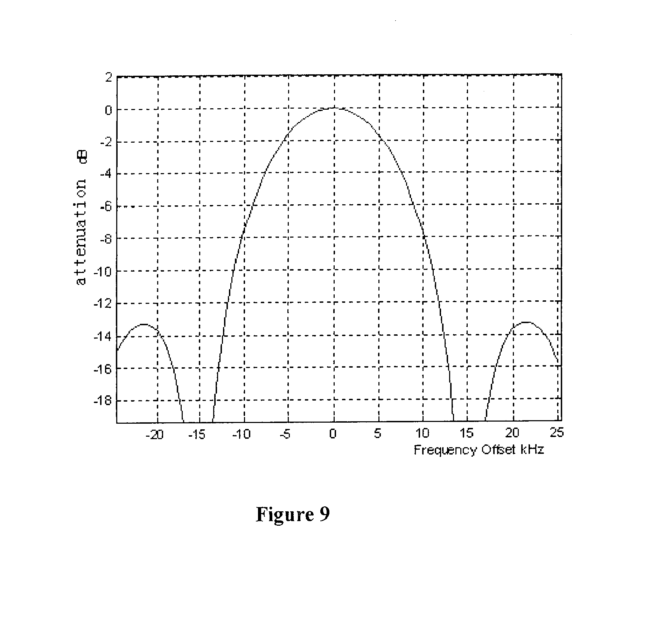

S11 - define and store in memory the control words for controlling automatic frequency correction. The loss of performance in the correlation peak output caused by the frequency inaccuracies is evident during the first step of the cell search process. With reference to FIG. 9, the attenuation of the correlation peak in the frequency offset range of -25 kHz to 25 kHz is shown. With an offset of 5 kHz, a 2 dB reduction will occurs to correlation peak power, while the power reduction is 8 dB with a 10 kHz offset, and a 18 dB power reduction of the correlation peak can be reached in case of a 13 kHz or greater offset.

In the present invention, a plurality of AFC control words are first defined. In this embodiment, 41 such words are defined corresponding to a local oscillator frequency ranging from -20 kHz to 20 kHz, with a 1 kHz interval between every two words. Thus, with a frequency offset within the range of -21 kHz to 21 kHz, there definitely exists a defined AFC control word in the 41 words denoting a maximum correlation peak, and this can narrow the offset down to a 1 kHz range. It can be appreciated that depending upon the application, a smaller or larger number of control words may be defined and stored.

**S12** - select a control word and perform the following operations:

(1) Perform correlation between the received slots and the primary synchronization code in the matched filter. The matched filter is a pruned efficient Golay correlator referenced in FIG. 2. The primary synchronization code is a generalized hierarchical Gray sequence Cp defined as:

$$a = <1,1,1,1,1,1,-1,-1,1,-1,1,-1,1,-1,-1,1>$$

$$Cp= (1+j) * < a,a,a,-a,-a,a,-a,-a,a,a,a,-a,a,-a,a,a >$$

Correspondingly, the matched filter for performing correlation between the primary synchronization code (PSC) and received signal is schematically shown in FIG. 2. The filter parameter is configured as:

$$[D1,D2,D3,D4,D5,D6,D7,D8 ]=[128,64,16,32,8,1,4,2]*OSR$$

$$[w1,w2,w3,w4,w5,w6,w7,w8]=[1,-1,1,1,1,1,1,1]$$

(2) Sum and average the results of the correlations of above.

(3) Determine the correlation peak using a peak detection device.

The above three operations (1)-(3) are similar to the prior correlation peak generating technique.

**S13** - Repeat **S12** to generate correlation peaks until the control words are finished. In this embodiment, 41 correlation peaks are successively obtained corresponding to 41 control words.

**S14** - Compare the correlation peaks to determine the maximum peak and store the corresponding control word for future operation, for example, frequency offset fine correction.

**S15** - Perfonn slot synchronization with the correlation peak and AFC control word. Typically, the slot boundary is 128 chips ahead the peak's location.

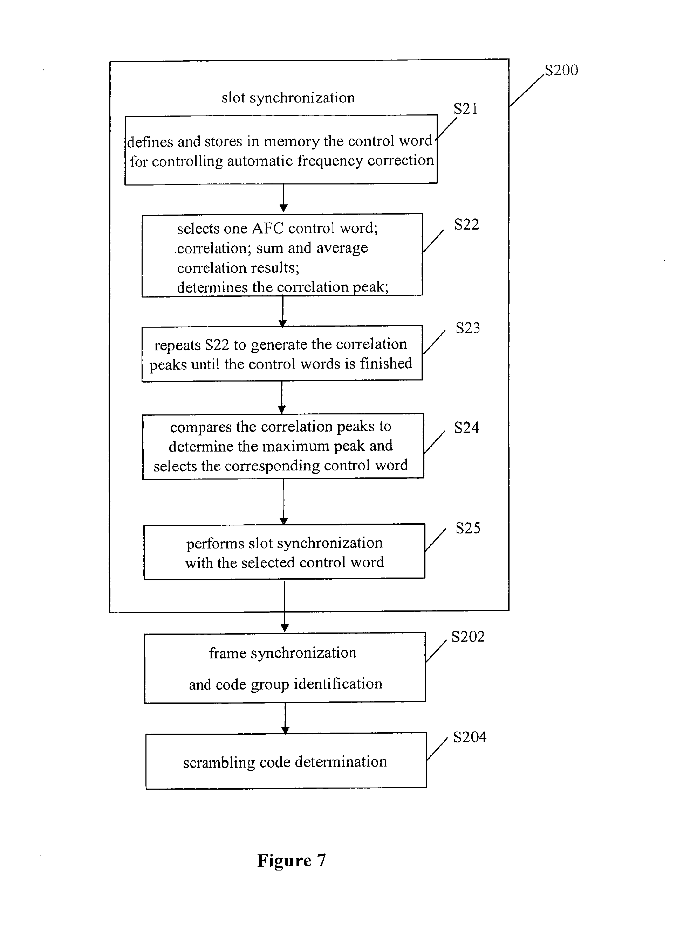

FIG. 7 illustrates an apparatus for frequency correction 100 capable of implementing the method of FIG. 5. The frequency correction apparatus 100 is connected to the output signal of the RF section and includes:

(1) Matched filter 102 for detecting the primary synchronization code, e.g. Golay correlator.

(2) Summer and averager 104 for summing and averaging the filter's output correlation results over a number of slots.

(3) Peak detector 106 for detecting the correlation peak.
Altogether, components 102, 104 and 106 can be designated as a slot synchronization device 108.

(4) A control word table 110 for storing the control words. The table is stored in a volatile or nonvolatile memory device, which can be embodied as flash memory, floppy disc, hard disc, compact disc RAM, or ROM etc. In one embodiment, table 110 contains 41 control words.

(5) A first selector 118 for selecting a control word from the table 110.

(6) A comparator 114 receiving the peak detector 106 output for comparing the correlation peaks.

(7) A frequency estimation device 116 that receives the output signal from RF section to acquire frequency estimate.

(8) A second selector 112 for controlling the start of device 116;

(9) Automatic frequency correction control register 120 connecting to selector 112 and 118. When frequency estimation device 116 starts, register 120 receives and processes the sum of output of frequency estimation device 116 and a control word in control word table 110, and applies them to the RF section.

The above elements are all located in a baseband section. The RF section of device 100 including DAC and VCO is similar to prior RF systems, and thus is not described in detail here.

Device 100 operates in this manner: Selector 112 is initially put in the mode of shutting down the operation of the frequency correction device 116. Selector 118 selects a control word from the table 110 and then filter 102 performs a correlation using this word.

The result of the correlation over a number of slots (or "received slots") is passed to summer and averager 104. Then a correlation peak is obtained in the peak detector 106. For every control word in the table 110, the above process is performed to generate a correlation peak. In this embodiment, 41 peaks are generated. Comparator 114 receives and compares the 41 correlation peaks to determine the maximum and fixes selector 118 onto the corresponding control word in the table 110.

Selector 112 then operates to start the frequency correction device 116. The automatic frequency correction control register 120 receives the output of the frequency correction device 116 and selector 118 fixed control word for future frequency offset fine correction.

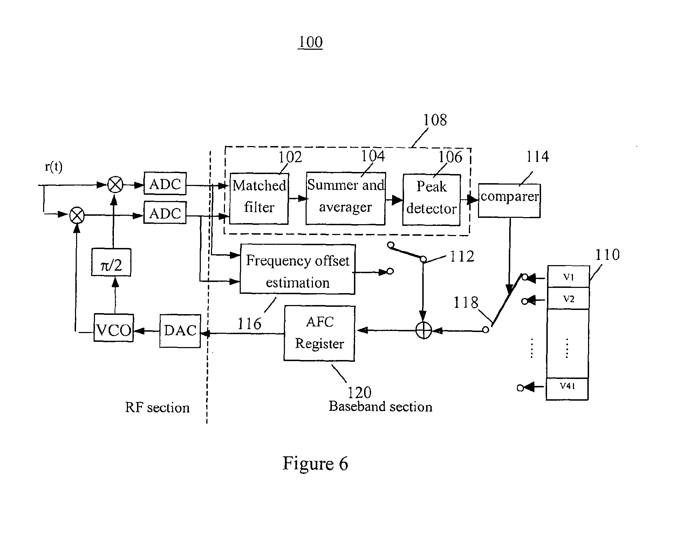

With the proposed slot synchronization method which combines frequency offset correction operation, the invention further provides a cell search method in a W-CDMA system. The method is illustrated in FIG. 6 which details a cell search method comprising:

**S200** slot synchronization step:

S21. defines and stores in memory the control word for controlling automatic frequency correction

S22. selects one AFC control word to perform and following operations:

- performs correlation between the received slots and the primary synchronization code in the matched filter;

- sums and averages the results of the correlation;

- determines the correlation peak in the peak detection device;

S23. repeats S22 to generate the correlation peaks until the control words is finished.

S24. compares the correlation peaks to determine the maximum peak and stores the corresponding control word for future operation, for example, frequency offset fine correction.

S25. performs slot synchronization with the correlation peak and AFC control word.

The above operation is similar to steps denoted as S11-S15.

**S202** frame synchronization and code group of the base station identification step;

**S204** scrambling code determination step;

S202 and S204 are similar to the steps in the conventional cell search operation, thus, the operation of them is not described in details.

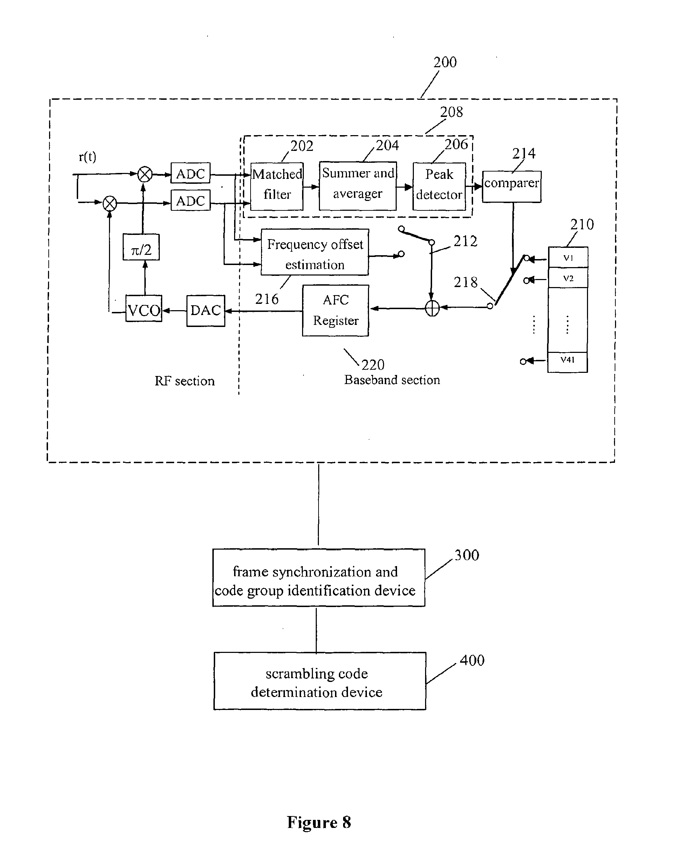

An apparatus of cell search performing the method above is detailed in FIG. 8. The apparatus receives the output signal of RF section and includes means for slot synchronization 200, frame synchronization and code group identification device 300, scrambling code determination device 400. The means for slot synchronization 200 and performing frequency offset correction includes:

Matched filter 202 for detecting the primary synchronization code, or Golay correlator. Summer and averager 204 for summing and averaging filter's output correlation results over a number of slots. Peak decision 206 for detecting the correlation peak. Altogether, 202,204 and 206 can be designated as slot synchronization device 208.

Frequency Correction apparatus 200 further includes control word table 210 for storing the a number of AFC control words, the table is stored in a volatile or nonvolatile memory device, which can be embodied as floppy disc, hard disc, compact disc RAM, or ROM etc. in the preferred embodiment, Table 210 contains in it 41 control words.

A first selector 218 for selecting control word from the table 210.

Comparator 214 receiving peak decision 206 output for comparing the correlation peaks;

Frequency estimation device 216 receiving output signal from RF section to acquire frequency estimate;

A second selector 212 for controlling the startup of device 216;

Automatic frequency correction control register 220 connecting to selector 212 and 218. When frequency estimation device 216 starts, register 220 receives and processes the output of frequency estimation device 116 and a control word in control word table 210, and applies them to RF section.

The above elements are located at baseband section, the RF section of Device 200 including DAC and VCO is similar to the conventional RF system, and thus is not described in details here.

Device 200 operates in this manner: Selector 212 is initially put on the mode of shutting down the operation of the frequency correction device 216; selector 218 selects a control word from the Table 210, and then in filter 202 performing the correlation using this word, the result of the correlation over a number of slots is passed on summer and averager 204, then correlation peak is obtained in the peak decision 106. For every control word in the Table 210, the above process is performed to generate a correlation peak. In this embodiment, 41 peaks are generated. Comparator 214 receives and compares the 41 correlation peaks to determine the maximum and fix selector 218 on the corresponding control word in the table 210. Selector 212 operates to start the frequency correction device 216; the automatic frequency correction control register 220 receives the output of the frequency correction device 216 and selector 218 fixed control word for future frequency offset fine correction.

The output of device 200 is applied to frame synchronization and code group identification device 300 and scrambling code determination device 400. The later two devices 300 an 400 are not germane to the present claimed invention and therefore not discussed further here, but will be known to those skilled in the art.

With the technique of the invention, the frequency offset of the local oscillator can be reduced to less than 3 kHz, and in most cases, an offset within 1 kHz can be reached. Thus, the frequency coarse correction is achieved while synchronizing the slot. In a later stage, an accuracy of 0.1 parts per million (PPM) which is required by 3G specification can be obtained after the frequency offset fine correcting performed by the AFC device.

In the present invention, automatic frequency correction is introduced in the first step of the cell search to noticeably reduce the frequency offset from a maximum of 21kHz to as little as 1kHz so as to not only improve the efficiency of the later offset correction operation, but also enhance the performance of cell search at a low system cost.

While the invention has been described in the context of a preferred embodiment, it will be apparent to those skilled in the art that the present invention may be modified in numerous ways and may assume many embodiments other than that specifically set out and described above. Accordingly, it is intended by the appended claims to cover all modifications of the invention which fall within the true spirit and scope of the invention.

**Claims**

1. A frequency correction method in a W-CDMA system, the method comprising:

(a) defining and storing in memory a plurality of control words for controlling automatic frequency correction;
(b) for each of said plurality of control words:

(1) performing a correlation between the data in each received slot and a primary synchronization code in a matched filter;
(2) summing and averaging the results of the correlations;
(3) determining the correlation peak in a peak detection device;

(c) comparing the correlation peaks to determine the maximum peak and storing the corresponding control word; and
(e) performing slot synchronization with the corresponding control word.

2. The method of Claim 1, wherein the primary synchronization code is a generalized hierarchical Gray sequence Cp defined as such:

$$a = <\ 1,1,1,1,1,1,-1,-1,1,-1,1,-1,1,-1,-1,1\ >$$

$$Cp = (1+j)\ *\ <\ a,a,a,-a,-a,a,-a,-a,a,a,a,-a,a,-a,a,a\ >$$

3. The method of Claim 1, wherein the matched filter is configured as such:

$$[D1,D2,D3,D4,D5,D6,D7,D8\ ] = [128,64,16,32,8,1,4,2]*OSR$$

$$[w1,w2,w3,w4,w5,w6,w7,w8] = [1,-1,1,1,1,1,1,1]$$

4. The method of Claim 1, wherein the plurality of control words correspond to an offset range of -20 kHz to 20 kHz, with a 1 kHz interval offset between adjacent control words.

5. A cell search method in a W-CDMA system comprising:

defining and storing in memory a plurality of control words for controlling automatic frequency correction
for each of said plurality of control words:

(1) performing a correlation between the data in each received slot and a primary synchronization code in a matched filter;
(2) summing and averaging the results of the correlations;
(3) detennining the correlation peak in a peak detection device;

comparing the correlation peaks to detennine the maximum peak and storing the corresponding control word;
performing slot synchronization with the correlation peak and control word;
identifying the frame synchronization and code group of the base station; and
determining the scrambling code of the base station.

6. The method of Claim 5, wherein the primary synchronization code is generalized hierarchical Gray sequence Cp defined as such:

$$a = <1,1,1,1,1,1,-1,-1,1,-1,1,-1,1,-1,-1,1>$$

$$Cp = (1+j) * < a,a,a,-a,-a,a,-a,-a,a,a,a,-a,a,-a,a,a >$$

7. The method of Claim 5, wherein the matched filter is configured as such:

$$[D1,D2,D3,D4,D5,D6,D7,D8] = [128,64,16,32,8,1,4,2]*OSR$$

$$[w1,w2,w3,w4,w5,w6,w7,w8] = [1,-1,1,1,1,1,1,1]$$

8. The method of Claim 5, wherein the control words corresponds to a offset range of -20 kHz to 20 kHz, with a 1 kHz interval offset between adjacent code words.

9. An apparatus for frequency correction, the apparatus receiving the output signal of a RF section of a mobile handset, the apparatus comprising:

a matched filter for detecting a primary synchronization code;
a summer and averager for summing and averaging the matched filter's output correlation results over a number of slots;
a peak detector for detecting the correlation peak;
a control word table for storing a plurality of control words;
a first selector for selecting a control word from the table;
a comparator receiving peak decision output for comparing the correlation peaks;
a frequency estimation device receiving the output signal from RF section to acquire a frequency estimate;
a second selector for controlling the start of the device; and
an automatic frequency correction control register connected to the two selectors.

10. The apparatus of Claim 9, wherein the primary synchronization code is generalized hierarchical Gray sequence Cp defined as such:

$$a = < 1,1,1,1,1,1,-1,-1,1,-1,1,-1,1,-1,-1,1 >$$

$$Cp = (1+j) * < a,a,a,-a,-a,a,-a,-a,a,a,a,-a,a,-a,a,a >$$

11. The apparatus of Claim 9, wherein the matched filter is configured as such:

$$[D1,D2,D3,D4,D5,D6,D7,D8] = [128,64,16,32,8,1,4,2]*OSR$$

$$[w1,w2,w3,w4,w5,w6,w7,w8] = [1,-1,1,1,1,1,1,1]$$

12. The apparatus of Claim 9, wherein the control words correspond to a offset range of -20 kHz to 20 kHz with a 1 kHz interval offset between adjacent control words.

13. An apparatus for cell search, the apparatus receiving the output signal of an RF section and including means for slot synchronization, means for frame synchronization and code group identification, means for scrambling code determination, the means for slot synchronization further comprising:

  a matched filter for detecting a primary synchronization code;
  a summer and averager for summing and averaging the matched filter's output correlation results over a number of slots;
  a peak decision for detecting a correlation peak;
  a control word table for storing the a plurality of control words;
  a first selector for selecting a control word from the table;
  a comparator receiving peak decision output for comparing the correlation peaks;
  a frequency estimation device receiving the output signal from the RF section to acquire a frequency estimate;
  a second selector for controlling the start of the device; and
  an automatic frequency correction control register connected to the two selectors.

14. The apparatus of Claim 13 wherein the primary synchronization code is a generalized hierarchical Gray sequence Cp defined as such:

$$a = < 1,1,1,1,1,1,-1,-1,1,-1,1,-1,1,-1,-1,1 >$$

$$Cp = (1+j) * < a,a,a,-a,-a,a,-a,-a,a,a,a,-a,a,-a,a,a >$$

15. The apparatus of Claim 13, wherein the matched filter is configured as:

$$[D1,D2,D3,D4,D5,D6,D7,D8] = [128,64,16,32,8,1,4,2]*OSR$$

$$[w1,w2,w3,w4,w5,w6,w7,w8] = [1,-1,1,1,1,1,1,1]$$

**16.** The apparatus of Claim 13 wherein the control words correspond to an offset range of -20 kHz to 20 kHz, with a 1 kHz interval offset between adjacent control words.

Slot #0          Slot #1                    Slot #14

Primary
SCH        $Ac_p$          $Ac_p$                      $Ac_p$

Secondary
SCH        $Ac_s^{i,0}$        $Ac_s^{i,1}$         • • • • •         $Ac_s^{i,1}$

           ←— 256 chips —→

           ←——— 2560 chips ———→

←———————————————— One 10 ms SCH radio frame ————————————————→

Figure1

w1        w2        w3        w4        w5        w6        w7        w8

Figure 2

Figure 3A

Figure 3B

300

306

r(t)

A/D

A/D

Frequency offset estimation

π/2

312

310

308

VCO

D/A

AFC Register

RF Part

Baseband Process Part

Figure 4

slot synchronization

```
┌──────────────────────────────────────┐  S11
│ defines and stores in memory the control word │
│ for controlling automatic frequency correction │
└──────────────────────────────────────┘
                    │
                    ▼
┌──────────────────────────────────────┐  S12
│ selects one AFC control word;        │
│ correlation; sum and average         │
│ correlation results;                 │
│ determines the correlation peak;     │
└──────────────────────────────────────┘
                    │
                    ▼
┌──────────────────────────────────────┐  S13
│ repeats S22 to generate the correlation │
│ peaks until the control words is finished │
└──────────────────────────────────────┘
                    │
                    ▼
┌──────────────────────────────────────┐  S14
│ compares the correlation peaks to    │
│ determine the maximum peak and       │
│ selects the corresponding control word │
└──────────────────────────────────────┘
                    │
                    ▼
┌──────────────────────────────────────┐  S15
│ performs slot synchronization        │
│ with the selected control word       │
└──────────────────────────────────────┘
```

Figure 5

<u>100</u>

Figure 6

S200

slot synchronization

S21

defines and stores in memory the control word
for controlling automatic frequency correction

S22

selects one AFC control word;
correlation; sum and average
correlation results;
determines the correlation peak;

S23

repeats S22 to generate the correlation
peaks until the control words is finished

S24

compares the correlation peaks to
determine the maximum peak and
selects the corresponding control word

S25

performs slot synchronization
with the selected control word

S202

frame synchronization

and code group identification

S204

scrambling code determination

**Figure 7**

**Figure 8**

**Figure 9**

**European Patent Office**

**EUROPEAN SEARCH REPORT**

Application Number

EP 06 00 7845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 152 546 A (NOKIA CORPORATION) 7 November 2001 (2001-11-07) * paragraphs [0019] - [0027]; figure 2 * ----- | 1-16 | INV. H04B1/707 ADD. H04L27/00 |
| X | JAN-SHIN HO ET AL: "Cell search in the 3GPP W-CDMA/FDD system under large fyequency and clock offset" SIGNAL PROCESSING ADVANCES IN WIRELESS COMMUNICATIONS, 2004 IEEE 5TH WORKSHOP ON LISBON, PORTUGAL 11-14 JULY 2004, PISCATAWAY, NJ, USA,IEEE, 11 July 2004 (2004-07-11), pages 64-68, XP010807043 ISBN: 0-7803-8337-0 * paragraphs [000I], [0III]; figure 4a * ----- | 1-16 | |
| A | "Generalised Hierarchical Golay Sequence for PSC with low complexity" TSG-RAN WORKING GROUP MEETING, no. 5, 4 June 1999 (1999-06-04), pages 1-6, XP002178401 * the whole document * ----- | 1-16 | TECHNICAL FIELDS SEARCHED (IPC) H04B |
| A | US 2003/128740 A1 (IWAMOTO HIROAKI ET AL) 10 July 2003 (2003-07-10) * abstract * ----- | 1-16 | |

The present search report has been drawn up for all claims

| Place of search | Date of completion of the search | Examiner |
|---|---|---|
| The Hague | 10 July 2006 | Nilsson, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 7845

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2006

| Patent document cited in search report | | Publication date | Patent family member(s) | | Publication date |
|---|---|---|---|---|---|
| EP 1152546 | A | 07-11-2001 | US | 6810072 B1 | 26-10-2004 |
| US 2003128740 | A1 | 10-07-2003 | US | 2003112853 A1 | 19-06-2003 |

For more details about this annex : see Official Journal of the European Patent Office, No. 12/82